**Europäisches Patentamt**

**European Patent Office**

**Office européen des brevets**

(19)

(11)  **EP 1 113 630 A2**

(12)  **EUROPEAN PATENT APPLICATION**

(43) Date of publication:
**04.07.2001 Bulletin 2001/27**

(51) Int Cl.⁷: **H04L 12/56**, H04Q 11/04

(21) Application number: **00311757.9**

(22) Date of filing: **28.12.2000**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (71) Applicant: **Nortel Networks Limited**<br>**Montreal, Quebec H2Y 3Y4 (CA)** |
| (30) Priority: **31.12.1999 US 174135 P**<br>**17.02.2000 US 506241** | (72) Inventor: **Tran, Hung V.**<br>**Dallas, Texas 75211 (US)** |
| | (74) Representative: **Mackenzie, Andrew Bryan et al**<br>**Sommerville & Rushton,**<br>**45 Grosvenor Road**<br>**St Albans, Herts. AL1 3AW (GB)** |

(54) **QoS and performance control techniques for packet-based networks characterized by self-similar traffic**

(57)    Techniques which may be used to (1) design and construct a switching device characterized by both reduced buffer space requirements and the ability to handle self-similar traffic and (2) enable a switch to maintain performance standards while experiencing higher levels of self-similar traffic are disclosed herein have been achieved by a discover that below a certain utilization factor threshold value of approximately 38%, the size of the buffer space needed to handle self-similar traffic is less than that commonly believed while, above that utilization factor threshold value, the size of the buffer space needed to handle self-similar traffic is greater than that commonly believed.

*Fig. 1*

EP 1 113 630 A2

## Description

### Cross Reference to Related Provisional Application

This application claims the benefit of U.S. Provisional Patent Application Serial No. 60/174,135, filed December 31, 1999.

### Technical Field

The invention relates generally to packet-based networks having self-similar traffic and, more particularly, to a method for enhancing performance characteristics for a packet-based network experiencing degradation due to self-similar traffic.

### Background of the Invention

Asynchronous transfer mode (or "ATM") is a high-performance, cell-oriented switching and multiplexing technology that utilizes fixed-length packets to carry different types of traffic. Like other packet-based switching techniques such as X.25, frame relay and transmission control protocol/internet protocol (or "TCP/IP"), ATM integrates the multiplexing and switching functions, is well suited for bursty traffic, and allows communication between devices that operate at different speeds. As a result, ATM networks are particularly well suited for multimedia applications that involve one or more of these characteristics. ATM networks also allows the user to specify resources required on a per-connection basis. Presently, there are five classes of service specified for ATM networks. These are constant bit rate (or "CBR"), variable bit rate--non-real time (or "VBR-NRT"), variable bit rate-real time (or "VBR-RT"), available bit rate (or "ABR") and unspecified bit rate (or "UBR").

It is well known that ethernet local area network (or "LAN") traffic is statistically self-similar and is characterized by fractal-like behavior. As a result, such traffic exhibits scale-invariance which differs from traditional models of network traffic. It is further known that the degree of self-similarity for an ethernet LAN increases with higher loads. As a result, traditional queuing theory proved inadequate to predict performance. For example. ATM switch vendors once assumed that data traffic is a multiplex of a large number of independent traffic streams. Such an assumption results in a Poisson process and, as a result, the vendors produced switches with relatively small buffers on the order of 10-100 cells. However, in use, cell losses were beyond that expected and, as a result, the switches had to be redesigned.

Current approaches use asymptotical approximations such as logarithmic asymptotics of the queue length distribution. However, such solutions still remain unsatisfactory. For example, in the aforementioned approach, the explicit form of the queue length distribution remains unknown for any queuing system with a long-range dependent input process. Furthermore, in telecommunication applications, there is a need to constantly resolve the tradeoff between Quality of Service (or "QoS") requirements and capacity. The aforementioned approaches make no attempt to address QoS or other performance issues. Thus, presently, it is currently accepted that, in the event that a network is characterized by self-similarity, the network will suffer from performance problems such as increases in packet dropping probability and packet delay. Furthermore, the size of queuing buffer needed to handle the self-similar traffic begins to increase dramatically.

### Summary of the Invention

It is, therefore, the object of the invention to provide various techniques which may be used to design and construct a packet-based switching device characterized by reduced buffer space requirements while still able to handle self-similar traffic.

It is a further object of the invention to apply the same techniques to call admission control techniques, thereby enabling a switch to maintain performance standard while experiencing higher levels of similar-similar traffic.

The aforementioned objects have been achieved by a discovery that, below a certain utilization factor threshold, the size of the buffer space needed to handle self- similar traffic is less than that commonly believed.

In one embodiment of the application of this discovery, the present invention is directed to a method of constructing a switching device for a packet-based network. To construct the switching device, a self-similarity characteristic of traffic to be handled by the switching device is first evaluated. The switching device is then constructed to include a buffer for queuing packets of data to be handled by the switching device. The buffer is sized based upon the evaluation of the traffic self-similarity characteristic in combination with a utilization rate/buffer size functional relationship uniquely characterized by reduced buffer consumption rates when handling self-similar traffic for utilization rates generally below a utilization rate threshold value.

In one aspect thereof, the self-similarity characteristic of traffic to be handled by the switching device is evaluated by determining a self-similarity ratio for the traffic to be handled by the switching device. Once the self-similarity ratio is determined, and in accordance with another aspect of this embodiment of the invention, the buffer is sized based upon the self-similarity ratio for the traffic to be handled by the switching device.

In another aspect of this embodiment of the invention, construction of the switching device includes the step of determining a size of the buffer if the traffic to be handled by the switching device was entirely non-self-similar. A self-similarity ratio is then determined and the buffer sized based upon the size of the buffer handling entirely non-self-similar traffic and the self-similarity ratio for the switching device.

In another embodiment, the present invention is directed to a method of constructing a switching device for a packet-based network. To construct the switching device, a buffer for the switching device is initially sized as if the traffic handled by the switching device was entirely non-self-similar. A self-similarity ratio for the switching device is determined and the buffer resized using the self-similarity ratio for the switching device and the interim size of the buffer. By relatably sizing the buffer, the resultant buffer is sized differently than a proportionately sized buffer which may also be determined from the self-similarity ratio and the interim buffer size.

In one aspect of this embodiment of the invention, a utilization factor threshold value is determined for the switching device. In this aspect of the invention, the relatably sized buffer is smaller than the proportionately sized buffer if a utilization factor for the switching device is less than the utilization factor threshold value. In a further aspect thereof, the utilization factor threshold value is approximately 38%.

In another, alternate, aspect of this embodiment of the invention, a utilization factor threshold value is again determined for the switching device. Here, however, the relatably sized buffer is larger than the proportionately sized buffer if a utilization factor for the switching device is greater than the utilization factor threshold value. In a further aspect thereof, the utilization factor threshold value is approximately 38%.

In still another, alternate, aspect of this embodiment of the invention, a utilization factor threshold value is once again determined for the switching device. In this aspect, the relatably sized buffer is smaller than the proportionately sized buffer if a utilization factor for the switching device is less than the utilization factor threshold value or larger than the proportionately sized buffer if the utilization factor is greater than the utilization factor threshold value. In a further aspect thereof, the utilization factor threshold value is approximately 38%. In a still further aspect thereof, the self similarity ratio is determined from the ratio of total self-similar traffic for the switching device to total traffic for the switching device.

In still another embodiment, the present invention is directed to a method for maintaining QoS for a switching device which handles packet-type traffic in a packet-based network. In accordance with this embodiment of the invention, a utilization rate is determined for the switching device and, if the utilization rate exceeds a utilization rate threshold value, incoming data packets received by the switching device are rejected until the utilization rate drops below the utilization rate threshold value. In a further aspect of this embodiment of the invention, the utilization rate threshold value is approximately 38%.

In one aspect of this embodiment of the invention, a threshold value for a switching device performance characteristic is selected and a switching device performance characteristic rate is determined for the packet-type traffic handled by the switching device. The incoming data packets received by the switching device are rejected if the utilization rate drops below the utilization rate threshold value and the switching device performance characteristic rate drops below the switching device performance characteristic threshold value. In alternate further aspects thereof, the switching device performance characteristic may be the probability of the switching device dropping an incoming data packet or the queuing delay time for the switching device to process an incoming data packet.

In another aspect of this embodiment of the invention, a determination as to whether the drop in the switching device performance characteristic rate below the switching device performance characteristic threshold value was caused by self-similarity of the packet-type traffic being handled by the switching device. In a further aspect thereof, in order to determine if the drop of the switching device performance characteristic rate below the switching device performance characteristic threshold value was caused by self-similarity of the packet-type traffic handled by the switching device, a traffic self-similarity threshold value is selected and a self-similarity ratio for the packet-type traffic handled by the switching device is determined. If the self-similarity ratio for the packet-type traffic handled by the switching device is below the traffic self-similarity threshold value, it is determined that the drop of the switching device performance characteristic rate below the switching device performance characteristic threshold value was caused by self-similarity of the packet-type traffic handled by the switching device. Conversely, if it is determined that the drop of the switching device performance characteristic rate below the switching device performance characteristic threshold value was not caused by self-similarity of the packet-type traffic handled by the switching device, conventional call control techniques are initiated to resolve the drop in the switching device performance characteristic rate. In another aspect thereof, incoming data packets received by the switching device are rejected by identifying a defining characteristic for each one of the incoming data packets and selectively handling or rejecting each one of the incoming data packets based upon the defining characteristic for that incoming data packet. In a still further aspect, the defining characteristic is a type of class of service.

In still another embodiment, the present invention is directed to a switch which includes a call processing module, a buffer coupled to the call processing module and a call admission control module coupled to the call processing module. Data packets being transported between terminals coupled to a packet-based network via the switch are handled by the call processing module of the switch. The call processor module queues incoming data packets received thereby in the buffer to await handling. The call admission control module determines whether an incoming data packet received by the call processing module should be accepted or rejected for queuing in the buffer based upon whether a utilization rate for the switch exceeds a utilization rate threshold value determined using a utilization rate/buffer size functional relationship characterized by reduced buffer consumption rates when handling self-similar traffic for utflization rates generally below the utilization rate threshold value. In one aspect thereof, the utilization rate/buffer size functional relationship is further characterized by increased buffer consumption rates when handling self-similar traffic for utilization rates generally above the utilization rate threshold value. In another, the utilization rate threshold value is approximately 38%. In still another, the call admission control module further includes instructions for determining at least one performance characteristic for traffic being handled by the switch and instructions for determining a self-similarity characteristic for traffic being handled by the switch. In this aspect, the call admission control module determines whether the incoming data packet should be accepted or rejected based upon: (1) whether a performance characteristic rate for a first one of the at least one performance characteristic is below a performance characteristic threshold value, (2) whether a traffic self-similarity rate exceeds a traffic self-similarity threshold value and (3) whether the utilization rate for the switch exceeds the utilization rate threshold value.

In still yet another embodiment, the present invention is directed to a switch which includes a call processing module and a buffer coupled to the call processing module. The call processing module handles data packets being transported between terminals coupled to a packet-based network. Data packets received by the call processing module are queued in the buffer to await handling. The buffer is sized using a self-similarity ratio for traffic to be handled by the switch and an interim buffer size determined by assuming that all traffic to be handled by the switch is non-self-similar. The self-similarity ratio and the interim buffer size are functionally related such that self-similar traffic consumes buffer space at a reduced rate when a utilization rate for the switch is below a utilization rate threshold value. In one aspect thereof, the utilization rate threshold value is approximately 38%.

**Brief Description of the Drawings**

FIG. 1 is a graphical illustration of network capacity for a packet-based network which illustrates the functional relationship between self-similarity and utilization.
FIG. 2 is a block diagram of a packet-based network designed for operation in accordance with the teachings of the present invention and including at least one switch.
FIG. 3 is an expanded block diagram of the switch of FIG. 2.
FIG. 4 is a flow chart of a method for constructing a switch in accordance with one aspect of the present invention.
FIG. 5A is a flow chart of a method of initiating a call control technique for a packet-based network in accordance with further teachings of the present invention.
FIG. 5B is a flow chart of the call control technique initiated in FIG.

5A.

**Detailed Description**

*1. Theory of the Invention*

Traditionally, a normalized Fractal Brownian Motion model $Z(t)$, $-\infty < t < \infty$, with self-similarity parameter $H \in [\frac{1}{2}, 1)$, is assumed to satisfy the following properties:

a) $Z(t)$ has stationary increments;
b) $Z(0) = 0$, $E[Z(t)] = 0 \; \forall \; t$;
c) $E[Z^2(t)] = |\, t\, |^{2H}, \; \forall \; t$;
d) $Z(t)$ has continuous paths;
e) $Z(t)$ is Gaussian, i.e. its finite-dimensional distributions are multivariate Gaussian distributions; and
f) For $H=\frac{1}{2}$, $Z(t)$ is the standard Brownian motion.

The stationary storage model with fractional Brownian net input is a stochastic process $V(t)$, where:

$$V(t) = Sup_{s \leq l}[A(t) - A(s) - C(t-s)] \tag{1}$$

where

$t \in -(\propto, \infty);$
$A(t) = mt + \sqrt{am}\, Z(t);$
$Z(t)$ is a normalized fractional Brownian motion;
$m$ is the mean input rate, $m > 0;$
$a$ is the variance coefficient, $a > 0;$
$H \in [\frac{1}{2}, 1)$ is the self-similarity parameter of $Z(t)$; and
$C > m$ is the service rate.

While equation (1) introduces a traffic model $A(t)$ and a constant leak rate $C$, it is relevant for $V(t)$ only in that the net input process:

$$V(t) = A(t) - Ct \tag{2}$$

is of the form $c_1 Z - c_2 t$, with $c_2 > 0$.

Thus, $V(t)$ is a stationary process by definition. Accordingly, V(t) may be expressed as follows:

$$V(t) = Sup_{s \leq l}[A(t) - A(s) - C(t - s)] \tag{3}$$

This result is similar to the well-known expression for the amount of work (or virtual waiting time) in a queuing system with service rate $C$, cumulative work arrival process $A(t)$.

The Poisson process $N(t)$ with parameter m can be written in the form

$$N(t) = mt + M(t) \tag{4}$$

where $M(t)$ is the Martingale.

It is well-known that

$$\frac{N(at) - amt}{\sqrt{am}} \rightarrow W(t) \tag{5}$$

when $\alpha \rightarrow \infty$, and when $W(t)$ is the standard Brownian motion. As a result, the approximation of N(t) by a diffusion process is as follows:

$$N(t) \approx mt + \sqrt{am}\, W(t). \tag{6}$$

In the Brownian case, $H = \frac{1}{2}$, $a = 1$, $C = 1$. In this case, $V(t)$ is a continuous approximation of the M/D/1 queue.

It is further noted that:

$$E[Z(at)] = \alpha^H E[Z(t)], \tag{7}$$

for all $t$. Thus, clearly $Z(t)$ is a self-similar process, i.e. $Z(\alpha t)$ is identical in distribution to $\alpha^H Z(t)$, where $t$ is a real number and $\alpha > 0$.

As a result, for $t_1 < t_2 < t_3 < t_4$, it may be determined:

$$Cov[Z(t_2) - Z(t_1), Z(t_4) - Z(t_3)] = \frac{1}{2}[(t_4 - t_1)^{2H} - (t_3 - t_1)^{2H} + (t_3 - t_2)^{2H} - (t_4 - t_2)^{2H}], \tag{8}$$

so that in particular,

$$r(n) = Cov\left[Z(1), Z(n+1) = Z(n)\right]$$

$$= \frac{1}{2}\left[((n+1)-0)^{2H} - (n-0)^{2H} + (n-1)^{2H} - ((n+1)-1)^{2H}\right]$$

$$= \frac{1}{2}\left[(n+1)^{2H} - n^{2H} + (N-1)^{2H} - n^{2H}\right]$$

$$= \frac{1}{2}\left[(n^{2H} + 2H.n^{2H-1} + H(2H-1).n^{2H-2} + ...) - n^{2H}\right]$$

$$+ (n^{2H} - 2H.n^{2H-1} + H(2H-1).n^{2H-2} + ...) - n^{2H}]$$

$$= H(2H-1).n^{-2(1-H)} + O(n^{-(3-2H)}).$$

Thus, when $H > \frac{1}{2}$, the increment of $Z(t)$ are positively correlated, and so the process possesses long-range dependence (*i.e.*

$$\sum_0^\infty r(n) = \infty).$$

Let $A_i t$ be processes:

$$A_i(t) = m_i t + \sqrt{m_i a}Z_i(t), \; \forall t \tag{10}$$

where $a > 0$, $m_i > 0$, $i = 1,2,...K$, and $Z_i$'s are Fractional Brownian Motion processes with the common parameter $H$. Then:

$$A(t) \equiv \sum_{i=1}^{K} A_i(t)$$
$$= mt + \sqrt{ma}Z(t), \tag{11}$$

where

$$m = \sum_{i=1}^{K} m_i$$

and $Z(t)$ is a Fractional Brownian Motion process with the same parameter $H$.

Heuristically, $a$ and $H$ characterize the 'quality' of the traffic, while the long run mean rate $m$ characterize its 'quantity'. Since:

$$V(t) \equiv Sup_{s \leq t}[A(t) - A(s) - C(t - s)]$$

as defined above, and as $Z(at) =_{(d)} a^H Z(t)$, where $=_{(d)}$ means 'equal in distribution', the following relationship results:

$$V(\alpha t) = Sup_{s \leq t}[A(\alpha t) - A(\alpha s) - C(\alpha t - \alpha s)]$$
$$=_{(d)} Sup_{s \leq t}[m\alpha t + \sqrt{amZ(\alpha t)} - m\alpha s - \sqrt{amZ(\alpha s)} - C(\alpha t - \alpha s)]$$
$$=_{(d)} Sup_{s \leq t}[m\alpha t + \sqrt{am}\alpha^H Z(t) - m\alpha s - \sqrt{am}\alpha^H Z(s) - C(\alpha t - \alpha s)]$$
$$=_{(d)} \alpha^H Sup_{s \leq t}[m\alpha^{1-H}t + \sqrt{amZ(t)} - m\alpha^{1-H}s - \sqrt{amZ(s)} - \alpha^{1-H}C(t - s)]$$
$$=_{(d)} \alpha^H Sup_{s \leq t}[\sqrt{am}A(t) - \sqrt{am}A(s) - (m + \alpha^{1-H}(C - m)(t - s))].$$

By defining the process $V(t)$ in the above-described manner, then, for every $\alpha > 0$, the process $V(\alpha t)$ is distributed like $\alpha^H$ times the corresponding Fractional Brownian Motion process with parameters:

$$m + \alpha^{1-H}(C - m)(t - s), H, a \text{ and } C.$$

In telecommunication, a typical requirement in an application is for the probability of a certain amount of work in the system to exceed a certain level $x$ to be upper bounded by a 'Quality-of-Service' parameter $\in$.

$$P[V > x] = \in. \tag{13}$$

This equation also defines the storage requirement $x$. This equation also defines a hypersurface in the space *of* system parameters, separating the acceptable parameters from the unacceptable ones.

Calling $x$ the storage requirement, C the service rate, and $\rho \equiv \frac{m}{C}$ the utilization, at the critical boundary (the hypersurface mentioned above). Thus, a minimum queuing buffer size results when traffic has long-range dependence.

Recalling that:

$$V(t) \equiv Sup_{s \leq t}[A(t) - A(s) - C(t - s)]$$

with:

$$A(t) = mt + \sqrt{am}Z(t),$$

yields:

$$V(t) = Sup_{s \leq t}[\sqrt{am}Z(t) - (C - m)t - \sqrt{am}Z(s) + (C - m)s]. \tag{14}$$

In particular,

$$V(0) = Sup_{t > 0}[\sqrt{am}Z(t) - (C - m)t]. \tag{15}$$

Defining a function:

$$q(x,\beta) \equiv P[Sup_{t \geq 0}(Z(t) - \beta t) > x]. \tag{16}$$

Since $Z(t)$ is self-similar,

$$
\begin{aligned}
q(\alpha x, \beta) &= P\left[Sup_{t \geq 0}(Z(t) - \beta t) > \alpha x\right] \\
&= P\left[Sup_{t \geq 0}(Z(\frac{t}{\alpha^{1/H}}) - \frac{\beta}{\alpha}t) > x\right] \\
&= P\left[Sup_{t' \geq 0}(Z(t') - \alpha^{(1-H)/H}\beta t') > x\right] \\
&= q(x, \alpha^{(1-H)/H}\beta)
\end{aligned}
\tag{17}
$$

where

$$t' \equiv \frac{t}{\alpha^{VH}}$$

in the third equality above.
Defining:

$$f(y) \equiv q(1,y) = P[Sup_{t \geq 0}(Z(t) - yt) > 1], \tag{18}$$

then:

$$q(x,\beta) = q(1, x^{(1-H)/H}\beta) = f(x^{(1-H)/H}\beta). \tag{19}$$

Thus, $f(y)$ is strictly decreasing for $y > 0$, $f(0) = 1$ and $f(\infty) = 0$.

Furthermore, assuming:

$$P[V > t] = \in. \tag{20}$$

then:

$$\frac{1-\rho}{\rho^{1/(2H)}} c^{\frac{H-\frac{1}{2}}{H}} \cdot x^{\frac{1-H}{H}} = \text{constant} \; (= a^{1/(2H)} f^1(\in)), \tag{21}$$

where the constant $a^{1/(2H)}f^1(\in)$ depends only on $a$, $H$ and $\in$.

In the case of without self-similarity, when $H = \frac{1}{2}$, the following relationship results:

$$\frac{1-\rho}{\rho} x = af^1(\in) = \text{constant}. \tag{22}$$

This is a traditional case of a heavy traffic approximation of the M/D/1 queue.

Solving for x, for $H = \frac{1}{2}$ yields the following:

$$x_{1/2} = (af^{-1}(\in))\frac{\rho}{1-\rho} = (\text{constant})\frac{\rho}{1-\rho}. \qquad (23)$$

For the general case, it is as follows:

$$\frac{1-\rho}{\rho^{\frac{1}{2}H}} \cdot C^{\frac{H-\frac{1}{2}}{H}} \cdot x^{\frac{1-H}{H}} = \text{constant } (= a^{\frac{1}{1H}} f^{-1}(\in)),$$

solving for x in the general case *for H* yields the following:

$$x_H = (a^{\frac{1}{2H}} f^{-1}(\in))^{\frac{H}{1-H}} \left( C^{\frac{2H-1}{2(1-H)}} \right) \left( \frac{\rho^{\frac{1}{2}}}{(1-\rho)^H} \right)^{\frac{1}{1-H}}, \qquad (24)$$

Thus,

$$\frac{x_H}{x_{1/2}} = \left( a^{\frac{1}{2(1-H)}-1} f^{-1}(\in)^{\frac{H}{1-H}-1} C^{\frac{2H-1}{2(1-H)}} \right) \left( \frac{\rho^{\frac{1}{2}}}{(1-\rho)^H} \right)^{\frac{1}{1-H}} \left( \frac{1-\rho}{\rho} \right)$$

$$= \left( (aC)^{\frac{1}{2}} f^{-1}(\in) \right)^{\frac{2H-1}{1-H}} \left( \frac{\rho^{\frac{1}{2}}}{1-\rho} \right)^{\frac{2H-1}{1-H}}$$

and

$$\frac{x_H}{x_{1/2}} = \left( \frac{\beta\rho^{\frac{1}{2}}}{1-\rho} \right)^{\frac{2H-1}{1-H}} \qquad (25)$$

where:

$$\beta \equiv (aC)^{\frac{1}{2}} f^{-1}(\in)$$

is a constant.

Let $x_H$ be the storage size.

1. If *H* is fixed, when ½ < *H* < 1, then the ratio $r(\rho) \equiv \frac{x_H}{x_{1/2}}$ increases monotonically with respect to the utilization factor

$\rho$, where r(0) = 0,

$$ r\left(\left(\frac{-\beta + \sqrt{\beta^2 + 4}}{2}\right)^2\right) = 1 $$

and $r(1) = \infty$. Thus, specifically,

$$ \bullet \text{ If } 0 \le \rho < \left(\frac{-\beta + \sqrt{\beta^2 + 4}}{2}\right)^2, $$

then $x_H < x_{1/2}$,

$$ \bullet \text{ If } \left(\frac{-\beta + \sqrt{\beta^2 + 4}}{2}\right)^2 < \rho \le 1, $$

then $x_H > x_{1/2}$.

Letting $\rho$ be fixed, when $0 \le \rho \le 1$, and the ratio $r(H)$ be defined as $r(H) \equiv \frac{x_H}{x_{1/2}}$, then:

$$ \bullet \text{ If } 0 \le \rho < \left(\frac{-\beta + \sqrt{\beta^2 + 4}}{2}\right)^2, $$

then $x_H < x_{1/2}$ and $r(H)$ approaches 0 when $H$ approaches 1.

$$ \bullet \text{ If } \left(\frac{-\beta + \sqrt{\beta^2 + 4}}{2}\right)^2 < \rho \le 1, $$

then $x_{H,} > x_{1/2}$ and $r(H)$ becomes infinite when $H$ approaches 1.

- From this, a surprising result occurs: the higher the degree of self-similarity H, the lower the storage size requirement $x_H$, comparing with the traditional storage size when no self-similarity is detected, when the utilization factor $\rho$ is less than

$$\left( \frac{-\beta + \sqrt{\beta^2 + 4}}{2} \right)^2 .$$

Thus, in case of high degree of self-similarity in Internet traffic, it is desirable that the utilization factor is kept as low as or lower than

$$\left( \frac{-\beta + \sqrt{\beta^2 + 4}}{2} \right)^2$$

as possible.

Intuitively, when the network utilization is low, the service rate is high enough to process data, thus less storage area is required for data to wait to be processed. Since long-range dependence tends to emphasize the trend, if the trend is for the data to be processed quickly and this requiring less storage area, it continues to do so. On the other hand, when the network utilization is high, the service rate is low comparing to the rate of incoming data, more storage area is required to contain unprocessed data. Again, since long-range dependence tends to emphasize the trend, if the trend is to put data in storage to wait to be processed, long-range dependence will tend to amplify this trend, thus requiring even more storage area than its counter-part of almost purely random data.

Noting that the function:

$$g(x) \equiv \frac{-\beta + \sqrt{\beta^2 + 4}}{2}$$

has the derivative:

$$g'(x) = \frac{1}{2} \left( \frac{\beta - \sqrt{\beta^2 + 4}}{\sqrt{\beta^2 + 4}} \right),$$

which is less than zero when $\beta \geq 0$. Thus $g(x)$ decreases when $\beta \geq 0$. Since $g(0)$

$$= 1 \text{ and } g(\infty) = 0, \text{ so } 0 \leq \left( \frac{-\beta + \sqrt{\beta^2 + 4}}{2} \right)^2 \leq 1,$$

when $\beta \geq 0$.

The constant $\beta \equiv (aC)^{1/2} f^1 (\in)$ in (6) contains parameters $a, C, f^1(\in)$, where:

$\alpha$ is the variance coefficient
$C$ is the service rate
$f^1(\in)$ is related to the desired QoS.

Thus, normally the constant $\beta$ does not depend too heavily on the degree of self-similarity $H$. As a result:

$$\frac{x_H}{x_{1/2}} = (\text{constant})\left(\frac{\rho^{\frac{1}{2}}}{1-\rho}\right)^{\frac{2H-1}{1-H}}$$

Since $\frac{x_H}{x_{1/2}} = 1$ when $H = \frac{1}{2}$, the constant in the above equation is actually 1, in which case $\beta = 1$.

Also, even if the constant $\beta$ does depend heavily on the degree of self-similarity $H$, but if in the network, $H$ varies much slower than the utilization factor $\rho$, then we have

$$\frac{x_H}{x_{1.2}} = \left(\frac{\beta\rho^{\frac{1}{2}}}{1-\rho}\right)^{\frac{2H-1}{1-H}}$$

$$= (\beta)^{\frac{2H-1}{1-H}}\left(\frac{\rho^{\frac{1}{2}}}{1-p}\right)^{\frac{2H-1}{1-H}},$$

$$\approx (\text{constant})\left(\frac{\rho^{\frac{1}{2}}}{1-p}\right)^{\frac{2H-1}{1-H}}$$

Again, in this case, the constant in the above equation is actually 1, and so $\beta = 1$.
Thus, in the two situations above,

$$\left(\frac{-\beta + \sqrt{\beta^2 + 4}}{2}\right)^2 = \left(\frac{-1 + \sqrt{5}}{2}\right)^2 \approx 0.38196601.$$

So that in this case, when the degree of self-similarity H starts to get too high, and the packets start dropping, we want to keep the utilization factor as low as or lower than

$$\left(\frac{-1 + \sqrt{5}}{2}\right)^2 \approx 0.38196601$$

as possible.
We first calculate:

$$r = \frac{x_H}{x_{1/2}}(\rho, H)$$

then $x_H$ can be approximated by:

$$x_H\left(\Phi,\rho,H\right) \approx \left(x_{1,2}(\Phi)\right)\left(\frac{x_H}{x_{1,2}}\left(\rho,H\right)\right)$$

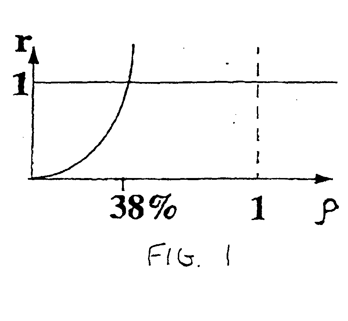

This relationship between r and utilization ($\rho$) may be seen in FIG. 1.

*2. Implementation of the Invention*

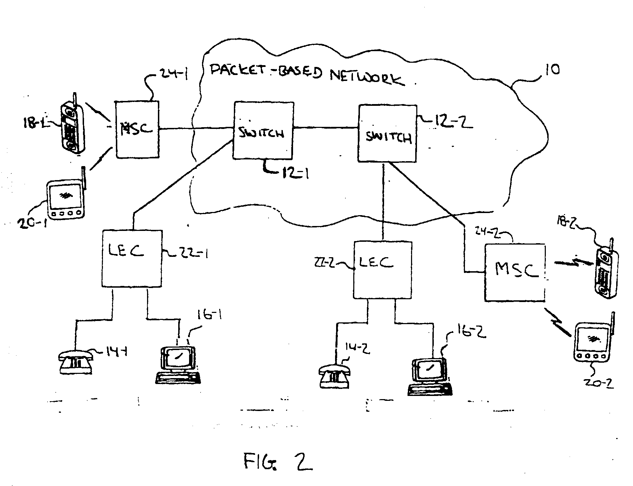

Turning now to the drawings, in FIG. 2, the reference numeral 10 designates a packet-based network. For example, the packet-based network 10 may be an asynchronous transfer mode (or "ATM") telecommunications network and the nodes may be ATM switches. However, the various switch construction and call control techniques disclosed herein are equally applicable to a synchronous digital hierarchy/synchronous optical network (or "SDH/SONET") or to any other type of packet-based network including, but not limited to, X.25, frame relay and transmission control protocol/Internet protocol (or "TCP/IP") networks. Furthermore, use of terms such as "call control" and/or "switch" is purely for ease of description and is not intended to suggest that the invention should be limited to the transfer of voice data over a telecommunications network. For example, in an IP-type packet-based network, the invention would be termed a "data control technique" which is performed by a "router." It is, therefore, fully intended that the claims of this application encompass devices and/or techniques for use in controlling the transmission of packets of various types of data, including. but not limited to image, video, multimedia and other types of packet-based data transmissions.

It should be noted that the description of the packet-based network 10 set forth below has been greatly simplified and that numerous components thereof have been omitted for ease of description. The packet-based network. 10 include a plurality of interconnected nodes 12, of which only two (12-1 and 12-2) are shown in FIG. 2 for ease of illustration. In the embodiment of the invention disclosed herein, each of the nodes 12-1 and 12-2 are switches.

The switches 12-1 and 12-2 are configured to transmit and receive messages, typically in the form of one or more packets of data, between various terminals coupled to the packet-based network 10. Depending on the geographic location of the terminals exchanging messages, the interconnection between the various switches 12-1 and 12-2 forming the packet-based network 10 and the amount of traffic being handled by the various switches 12-1 and 12-2 of the packet-based network 10, messages between terminals may be routed through one or more of the switches 12-1 and 12-2. The terminals coupled to the packet-based network 10 include wireline voice terminals 14-1 and 14-2, wireline data terminals 16-1 and 16-2, wireless voice terminals 18-1 and 18-2 and wireless data terminals 20-1 and 20-2. While a packet-based network will typically include various numbers of each of the aforementioned type of terminals, in FIG. 1, two such terminals are shown for each type.

The voice and data wireline terminals 14-1, 14-2 and 16-1 and 16-2 are coupled to the switch 12-1, 12-2 of the packet-based network 10 by a respective local exchange carrier (or "LEC") 22-1, 22-2. The LECs 22-1, 22-2 may be, for example, a regional Bell operating company (or "RBOC"). Conversely, the voice and data wireless terminals 18-1, 18-2 and 20-1, 20-2 are coupled to the switch 12-1, 12-2 of the packet-based network 10 by a respective mobile switching center (or "MSC") 24-1, 24-2. Of course, other switching devices, for example, a private branch exchange (or "PBX") may be used to couple various ones of the terminals 14-1 and 14-2. 16-1 and 16-2, 18-1 and 18-2. 20-1 and 20-2 to the switches 12-1 and 12-2. For ease of illustration, in FIG. 1. each LEC 22-1, 22-2 is shown as having a single wireline voice terminal 14-1, 14-2 and a single wireline data terminal 16-1, 16-2 coupled thereto while each MSC 24-1, 24-2 is shown as having a single wireless voice terminal 18-1, 18-2 and a single wireless data terminal 20-1, 20-2 coupled thereto. It should be clearly understood, however, that any number of voice and/or data terminals may be coupled to the various LECs 22-1, 22-2 and MSCs 24-1, 24-2. As illustrated herein, each one of the wireline voice terminals 14-1, 14-2 is a telephone, each one of the wireline data terminals 16-1, 16-2 is a personal computer (or "PC") or other type of computing system, each one of the wireless voice terminals 18-1, 18-2 is a digital cellular telephone and each one of the wireless data terminals 20-1, 20-2 is a personal digital access (or "PDA") terminal. It should be noted, however, that the types of terminals listed herein is not intended to be exclusive and that it is fully contemplated that other types of terminals will be coupled to the packet-based network 10. It is further contemplated that various types of resources and/or applications (not shown in FIG. 2), for example, voice, route, video and multimedia servers, may be coupled to the packet-based network 10. Such resources and/or applications may be accessed by the switches 12 or other nodes of the network to provide services requested by various ones of the terminals 14-1, 14-2, 16-1, 16-2, 18-1, 18-2, 20-1, 20-2.

Messages are exchanged between the various terminals 14-1, 14-2, 16-1, 16-2, 18-1, 18-2, 20-1, 20-2 in the form of a series of 53-byte, fixed size cells also commonly referred to as data packets. Each data packet contains a 5 octet header and a 48 octet information payload. Contained in the header is data that identifies the related data packet, a logical address that identifies the routing, header error correction bits and bits for priority handling and network management functions. The terminals 14-1, 14-2, 16-1, 16-2, 18-1, 18-2. 20-1, 20-2 construct messages comprised of a series of data packets and transfers the constructed messages to one of the switches 12-1, 12-2 via one of the packet-based network interfaces, for example, the LECs 22-1, 22-2 and the MSCs 24-1, 24-2, between the terminals 14-1, 14-2, 16-1, 16-2, 18-1, 18-2, 20-1, 20-2 and the packet-based network 10. In turn, based upon the information contained in the header of the received data packets, the switches 12-1, 12-2 direct the data packets towards their destination.

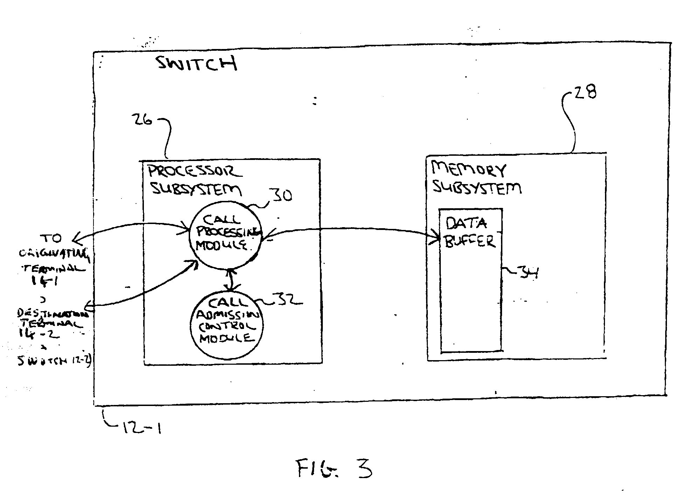

Referring next to FIG. 3, one of the switches 12-1 may now be seen in greater detail. In a manner similar to the foregoing description of the packet-based network 10. the description of the switch 12-1 set forth below has been greatly simplified and that numerous components thereof have been omitted for ease of description. As disclosed herein, the switch 12-1 is comprised of a processor subsystem 26 and a memory subsystem 28. While, in FIG. 2, both the processor and memory subsystems 26 and 28 are illustrated as unitary components, these subsystems respectively represent the collective processor and memory capacity which resides within the switch 12-1. It is fully contemplated that one or more of the processor and memory subsystems 26 and 28 may, in fact, be comprised of plural devices distributed in various physical locations within the switch 12-1 and coupled together by an appropriately sized bus, for example, a main system bus, configured for bidirectional exchanges of data, address and control signals. It should be further noted that, while both the processor and memory subsystems 26 and 28 are shown as physically residing within the switch 12-1, it is fully contemplated chat at least some portion of the processor and/or memory subsystems 26 and 28 may physically reside outside of the switch 12-1. In such a configuration, that portion of the processor and/or memory subsystems 26 and/or 28 physically residing outside of the switch 12-1 would, in effect, function as a processing and/ or memory resource accessible on demand to those portions of the processor and/or memory subsystems 26 and 28 residing within the switch 12-1.

Residing on the processor subsystem 26 is a call processing module 30. The call processing module 30 is a software module comprised of a set of instructions stored in the memory subsystem 28 and executable by the processor subsystem 26. An originating terminal, for example, the wireline voice terminal 14-1 generates a message comprised of a series of data packets for transmission to a destination terminal, for example, the voice terminal 14-2. Upon receipt of one of the data packets, the call processing module 30 will handle the data packet by executing a series of tasks which includes routing of the received data packet to the switch 12-2.

Also residing on the processor subsystem 26 is a call admission control module 32. Like the call processing module 30, the call admission control module 32 is a software module comprised of a set of instructions stored in the memory subsystem 28 and executable by the processor subsystem 26. While illustrated in FIG. 3 as a discrete software module, it is fully contemplated that the call admission control module 32 and the call processing module 30 may be integrated into a common software module. It is further contemplated that various portions of the call processing and/ or call admission control modules 30 and/or 32 may reside in a secondary software module which is periodically called by a primary software module to execute a certain component or subroutine of the call processing or call admission control modules 30 or 32.

An originating terminal, for example, the wireline voice terminal 14-1 generates a message comprised of a series of data packets for transmission to a destination terminal, for example, the voice terminal 14-2. Upon receipt of one of these data packets, the call processing module 30 will handle the data packet by executing a series of tasks which includes routing of the received data packet to the switch 12-2. Upon receipt of a data packet, and prior to the handling thereof, the call processing module 30 issues an inquiry to the call admission control module 32 as to whether the received data packet should be accepted. The call admission control module 32 determines whether the received data packet should be accepted or rejected. If rejected, the call processing module 30 terminates transmission of the received data packet to the destination terminal 14-2 and generates a notification message for transmission to the originating terminal 14-1. If accepted, the call processing module 30 continues handling the received data packet in the manner more fully described below.

As will also be more fully described below, under certain operating conditions, the call admission control module 32 will determine that the received data packet is to be rejected. Generally, however, it is contemplated that the call admission control module will determine that received data packets are to be rejected when operating conditions are such that quality-of-service (or "QoS") parameters cannot be maintained at acceptable levels. It is noted that QoS has a highly specialized definition within the telecommunications industry. As used herein, however, the term QoS is intended to refer to one or more of a wide array of performance characteristics generally considered to be indicative of the performance of a switching device and not to any specific definition of the term in use within the telecommunications industry. For example, it is specifically contemplated that the QoS for a switching device, for example, the switch 12, may be adversely affected by the probability of an incoming data packet being dropped increasing above a performance characteristic threshold value for the probability that an incoming data packet will be dropped or by the queuing delay time for a incoming data packet increasing above a performance characteristic threshold value for how long an incoming data packet will be queued in a data buffer 34 before being handled by the call processing module 30.

The data buffer 32 forms part of the memory subsystem 28. Alternately, the data buffer 34 may be configured as a defined area of the memory subsystem 28 or as a discrete memory component such as a first-in-first-out (or "FIFO) memory device. Upon accepting a data packet, the call processing module 30 places the data packet in the highest available position within a queue formed within the data buffer 34. For example, if the data buffer 34 is comprised of a series of registers chained together in series, the call processing module 30 will place the received data packet in the highest register which does not contain a data packet. Periodically, the call processing module 30 will handle one of the data packets awaiting handling in the data buffer 34. Again, using the example of the data buffer 34 being comprised of a series of registers chained together in series, when handling one of the data packets queued in the data buffer 34, the call processing module 30 retrieves the data packet stored in a forwardmost one of the registers. The data packets in the remaining ones of the registers are then advanced in the queue by writing each queued data packet to the register immediately forward of its current register. Of course, the foregoing is but one example of how the data buffer 34 may be configured and it is specifically contemplated that various types of data buffers are equally suitable for the use contemplated herein.

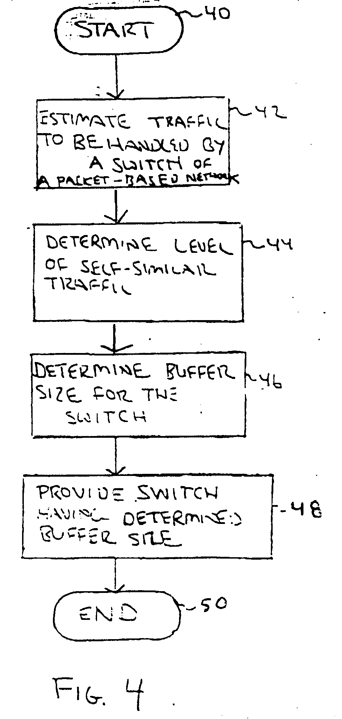

Referring next to FIG. 4, and in accordance with one aspect of the present invention, a method of constructing a switching device for use in a packet-based network will now be described in greater detail. The method commences at step 40 and, at step 42, the amount of traffic to be handled by a switch. for example, the switch 12-1, of a packet-based network, for example, the packet-based network 10, is estimated. Proceeding on to step 44, the amount of self-similar traffic to be handled by the switch 12- 1 is estimated. Generally, the level of self-similar traffic may be expressed as a ratio of the total traffic. For example, if half of the traffic handled by the switch 12-1 is self-similar, the level of self-similar traffic may be expressed as 0.5. Similarly, if the traffic handled by the switch 12-1 is entirely self-similar, the level of self-similar traffic may be expressed as 1.0

Continuing on to step 46, the buffer size for the switch 12-1 may now be estimated from the level of self-similar traffic and an interim buffer size which is an estimate of the buffer size if traffic for the switch 12-1 is entirely non-self-similar. Estimating the buffer size for a switch when traffic is entirely non-self-similar is well known in the art and need not be described in greater detail. To determine the buffer size for the switch 12-1, one need only estimate utilization of the switch and locate, on the graph illustrated in FIG. 1 and expressed as a numerical relationship in the *Theory of the Invention* section previously set forth, the point where r and the utilization rate intersect. This value is then multiplied by the interim buffer size previously estimated to determine the size of the buffer. Proceeding on to step 48, the switch 12-1 having a buffer sized in the manner described herein is provided. The method then ends at step 50.

It has been discovered that the functional relationship between the utilization factor for the switch 12-1 and the degree of self-similarity of the traffic being handled by the switch 12-1 varies from that expected using traditional analytical techniques. Specifically, when the utilization factor is less than approximately 38%, the higher degree of self-similarity, the less buffer size is required than that expected using traditional analytical techniques. Conversely, when the utilization factor is greater than approximately 38%, the higher the degree of self-similarity, the larger buffer size is required than that expected using traditional analytical techniques. Indeed, under these conditions, an exponentially larger buffer is required.

The aforementioned switch construction techniques may be used alone or with conjunction with the call control techniques set forth in FIGS. 5A-B. Specifically, once a suitable switch has been constructed in the described manner, performance of the switch 12-1 may be monitored in the manner described below.

Referring now to FIG. 5A, a method of performing a QoS/performance control for a switch, for example, the switch 12-1, will now be described in greater detail. The method commences at step 52 and, at step 54, the QoS/performance control algorithm commences. Alternately, the QoS/performance control algorithm may be in operation whenever the switch 12-1 is in use or may be periodically executed by a switch administrator from a user interface (not shown) to the switch 12-1. Proceeding on to step 56, threshold values for packet dropping, queue time delay and self-similarity are set. Generally, these threshold values may be pre-selected and maintained in the memory subsystem 28 with the instructions which comprise the call admission control software or may be selected by the switch administrator as user inputs provided in response to queries, generated by the call admission control module 32, upon execution of the QoS/performance control algorithm incorporated into the call admission control module 32. Of the aforementioned threshold values, the packet dropping threshold value relates to the probability that the switch 12-1 will drop a data packet while the queue time delay threshold value relates to the time which, after receipt by the call processing module 30, a data packet will be held in the data buffer 34 awaiting handling by the call processing module 30. Both the packet dropping threshold value and the queue time delay threshold value are typically factors in a traditional calculation of QoS. Accordingly, the threshold values for any particular switch will typically vary, depending on the performance levels to which a service provided has committed. The final threshold value—the switch traffic self-similarity threshold value—relates to the level of self-similarity for traffic being handled by the switch 12-1. Typically the self-similarity threshold value would be the same as that selected during construction of the switch 12-1.

In the description and claims which follow, various references are made to various performance characteristics being "greater" or "less than" the corresponding performance characteristic threshold value. Such references are merely intended to refer to a performance characteristic transitioning from an acceptable level to an unacceptable level and are not intended to require that the transition between acceptable and unacceptable levels occur in the disclosed direction. Indeed, many performance characteristics may be expressed in first and second ways, each having an oppositely orientated transition between acceptable and unacceptable levels. For example, the probability that a packet will be dropped by the switch 12-1 may be expressed as the probability that a packet will be successfully handled, for example, 0.995, or as the probability that the packet will be dropped, for example, 0.005. In the first case, the packet dropping performance characteristic is at an unacceptable level when the probability drops below 0.995 while, in the second case, the packet dropping performance characteristic is at an unacceptable level when the probability increases above 0.005. Finally, it should be clearly understood that the foregoing performance characteristics are by no means intended to be an exhaustive list of the performance characteristics which may be monitored by the QoS/performance control algorithm disclosed herein and that numerous other performance characteristics of the switch 12-1 may be monitored using the techniques disclosed herein.

Continuing on to step 58, the probability of an incoming packet being dropped is determined, for example, by reading (and analyzing, if necessary) appropriate performance characteristic data logged by the switch 12-1 in the memory subsystem 28. At step 60, a determination is made as to whether the probability of a data packet being dropped exceeds the packet dropping threshold value and that an unacceptably high number of packets are being dropped. Here. the comparison is expressed as a determination as to whether the probability of an incoming packet being dropped exceeds a threshold value. If it is determined that the rate at which data packets are being dropped is within acceptable limits, the method proceeds to step 62 where a determination is made as to how long an incoming packet is being queued in the buffer 34 awaiting handling by the call processing module 30. As before, this information may be determined by reading (and analyzing, if necessary) appropriate performance characteristic data logged by the switch 12-1 in the memory subsystem 28.

Next, the method proceeds to step 64 where a determination is made as to whether a queue delay time awaiting handling for an incoming data packet exceeds a queue time delay threshold value. If the queue delay time for an incoming data packet is shorter than the queue delay time threshold value, the method proceeds to step 66 where a determination is made as to whether the QoS/performance control algorithm should be terminated. If the QoS/performance control algorithm is continuously executed while the switch 12-1 is in operation, the algorithm would only be terminated in the event of failure or disconnect of the switch 12-1. If, however, the QoS/performance control algorithm is initiated from the user interface, the algorithm may be terminated at any time, for example, when a switch administrator has completed maintenance or other monitoring operations on the switch 12-1. If it is determined at step 66 that the QoS/performance control algorithm is to be terminated. the method ends at step 68. If, however, it is determined that execution of the QoS/performance control algorithm should continue, the method returns to step 58 where further monitoring of the performance of the switch 12-1 in handling incoming data packets is performed.

If it is determined at step 60 that the probability of an incoming data packet being dropped exceeds the packet dropping threshold value or if it is determined at step 64 that the queue time delay for an incoming data packet exceeds the queue time delay threshold value, the method proceeds to step 70 where self-similarity of traffic for the switch 12-1 is determined. As before the self-similarity of traffic may be determined from performance characteristic data logged by the switch 12-1 in the memory subsystem 28. Continuing on to step 72, the self-similarity of traffic determined in step 70 is compared to the self-similarity threshold value. If it is determined at step 72 that the self-similarity of traffic for the switch 12-1 is below the self-similarity threshold value, then the adverse performance characteristic, in the disclosed embodiment, either the excessive packet dropping detecting at step 60 or the excessive queue time delay detected at step 64 is not due to excessive self-similarity of traffic for the switch 12-1. The method would then proceed to step 74 where the adverse performance characteristics would be addressed using conventional call control techniques. After performing conventional maintenance, the method would then proceed to step 66 where, as previously described, the method determines whether the QoS/performance control algorithm should continue.

Returning to step 72, if the self-similarity of traffic at the switch 12-1 exceeds the self-similarity threshold value, then the adverse performance characteristics detected at either steps 60 or 64 would have been caused by a higher than expected self-similarity for the traffic handled by the switch 12-1. The method would then proceed to step 76 of FIG. 5B where a call control technique is initiated. Continuing on to step 78, a utilization rate for the switch would be determined. Again, the utilization rate may be determined by performance data logged by the switch 12-1 in the memory subsystem 28. After determining the utilization rate at step 78, the method proceeds to step 80 where it is determined if the utilization rate of the switch 12-1 is greater than approximately 38%. As detailed at greater length in the *Theory* section of this application, it has been discovered that by lowering the utilization rate of the switch 12-1, the demand for buffer space is reduced and, as a direct result therefore, the performance characteristics of the switch 12-1 may be enhanced.

Thus, if it is determined that the utilization rate is below approximately 38%. further reductions in the utilization rate will not provide a significant reduction in the needed buffer space for the switch 12-1. Accordingly, the method would then proceed to step 82 where the disclosed call control technique would be terminated and then on to step 66 (FIG. 5A) where a decision as to whether the disclosed QoS/performance control algorithm should continue or be terminated is again made.

Returning to step 80, if it is determined that the utilization rate is above approximately 38%, the method proceeds to step 84 where a process which lowers the utilization rate by rejecting incoming data packets is commenced. More specifically, at step 84, the method detects an incoming packet to the switch 12-1 and, at step 86, the utilization rate for the switch 12-1 is again checked in the same manner as before. If it determined at step 86 that the utilization rate is still above approximately 38%, the method proceeds to step 88 where the incoming data packet is rejected and back to step 84 to await a next incoming data packet.

In the embodiment disclosed herein, when the decision to reject data packets is made at step 88, all incoming data packets are rejected until, as more fully described below, the utilization rate drops below the utilization rate threshold value. It is fully contemplated, however, that in one embodiment of the invention, the call processing module 30 analyzes all incoming data packets and selectively rejects and/or accepts each incoming data packet based upon the analysis of each incoming data packet. For example. of the five classes of service specified for ATM networks, it may be desirable to accept CBR, VBR-NRT and VBR-RT while rejecting ABR and UBR. In another example, many service providers will guarantee a certain bandwidth to their subscribers, above which the bandwidth is unguaranteed. Here, it may be desirable to accept data packets for the guaranteed bandwidth while rejecting data packets for the unguaranteed bandwidth. While the selective acceptance of some data packets will slow the process of reducing the utilization rate to a level below the utilization rate threshold, such a process may be preferable when it will still accept selected data packets for handling since, by doing so, those data packets deemed more "important" to the service provider will be processed instead of rejected.

As incoming data packets are rejected and data packets which were accepted by the switch 12-1 before the call control techniques were initiated but were queued in the data buffer 34 to await handling by the call processing module 30, as incoming data packets are rejected and the queued data packets are handled, steps 84, 86 and 88 will repeatedly cycle as the utilization rate of the switch 12-1 will gradually drops towards the approximately 38% threshold value. Once it is determined at step 86 that the utilization rate has dropped below approximately 38%, the method will proceed to step 90 where the detected incoming packet will be accepted and then on to step 82 where the disclosed call control technique is terminated and then to step 66 (FIG. 5A) where, as previously set forth, a determination is made as to whether the disclosed QoS/performance control algorithm should continue.

Although illustrative embodiments of the invention have been shown and described, other modifications, changes, and substitutions are intended in the foregoing disclosure. Accordingly, it is appropriate that the appended claims be construed broadly and in a manner consistent with the scope of the invention.

**Claims**

1. A method of constructing a switching device suitable for use in a packet-based network, comprising the steps of:

   evaluating self-similarity of traffic for said switching device; and
   constructing said switching device to include a buffer for queuing packets of data to be handled by said switching device, said buffer sized based upon said evaluation of traffic self-similarity and upon a utilization rate/buffer size functional relationship characterized by reduced buffer consumption rates when handling self-similar traffic for utilization rates generally below a utilization rate threshold value.

2. The method of claim 1 wherein the step of evaluating self-similarity of traffic to be handled by said switching device further comprises the step of:
   determining a self-similarity ratio for said traffic to be handled by said switching device.

3. The method of claim 2 wherein the step of constructing said switching device to include a buffer for queuing packets of data to be handled by said switching device further comprises the step of:
   sizing said buffer based upon said self-similarity ratio for said traffic to be handled by said switching device.

4. The method of claim 1 wherein the step of constructing said switching device to include a buffer for queuing packets of data to be handled by said switching device further comprises the step of:

   determining a size of said buffer if said traffic to be handled by said switching device was entirely non-self-similar;
   determining a self-similarity ratio for said switching device; and

sizing said buffer based upon said size of said buffer handling entirely non-self-similar traffic and said self-similarity ratio for said switching device.

5. The method of claim 4 wherein said switching device is an ATM switch and said packet-based network is an ATM network.

6. The method of claim 4 wherein said switching device is a router and said packet-based network is an IP network.

7. A method of constructing a switching device suitable for use in a packet-based network, comprising the steps of:

determining an interim size of a buffer of said switching device if said traffic handled by said switching device was entirely non-self-similar;
determining a self-similarity ratio for said switching device; and
relatably sizing said buffer using said self-similarity ratio for said switching device and said interim size of said buffer;
said relatably sized buffer sized being sized differently than a proportionately sized buffer determined from said self-similarity ratio and said interim buffer size.

8. The method of claim 7 and further comprising the step of:

determining a utilization factor threshold value for said switching device;
said relatably sized buffer being smaller than said proportionately sized buffer if a utilization factor for said switching device is less than said utilization factor threshold value.

9. The method of claim 8 wherein said utilization factor threshold value is approximately 38%.

10. The method of claim 7 and further comprising the step of:

determining a utilization factor threshold value for said switching device;
said relatably sized buffer being larger than said proportionately sized buffer if a utilization factor for said switching device is greater than said utilization factor threshold value.

11. The method of claim 10 wherein said utilization factor threshold value is approximately 38%.

12. The method of claim 7 and further comprising the steps of:

determining a utilization factor threshold value for said switching device;
said relatably sized buffer being smaller than said proportionately sized buffer if a utilization factor for said switching device is less than said utilization factor threshold value and said relatably sized buffer being larger than said proportionately sized buffer if said utilization factor is greater than said utilization factor threshold value.

13. The method of claim 12 wherein said utilization factor threshold value is approximately 38%.

14. The method of claim 13 wherein said self-similarity ratio is determined from the ratio of total self-similar traffic for said switching device to total traffic for said switching device.

15. The method of claim 14 wherein said switching device is an ATM switch and said packet-based network is an ATM network.

16. The method of claim 14 wherein said switching device is a router and said packet-based network is an IP network.

17. A method for maintaining QoS for a switching device handling packet-type traffic, comprising the steps of:

determining a utilization rate for said switching device; and
if said utilization rate exceeds a utilization rate threshold value, rejecting incoming data packets received by said switching device until said utilization rate drops below said utilization rate threshold value.

18. The method of claim 17 wherein said utilization rate threshold value is approximately 38%.

19. The method of claim 17 and further comprising the steps of:

selecting a threshold value for a switching device performance characteristic; and
determining a switching device performance characteristic rate for said packet-type traffic handled by said switching device;
wherein said incoming data packets received by said switching device are rejected if said utilization rate drops below said utilization rate threshold value and said switching device performance characteristic rate drops below said switching device performance characteristic threshold value.

20. The method of claim 19 wherein said switching device performance characteristic is the probability of said switching device dropping an incoming data packet.

21. The method of claim 19 wherein said switching device performance characteristic is the queuing delay time for the switching device to process an incoming data packet.

22. The method of claim 19 and further comprising the step of determining if the drop of said switching device performance characteristic rate below said switching device performance characteristic threshold value was caused by self-similarity of said packet-type traffic handled by said switching device.

23. The method of claim 22 wherein the step of determining if the drop of said switching device performance characteristic rate below said switching device performance characteristic threshold value was caused by self-similarity of said packet-type traffic handled by said switching device further comprises the steps of:

selecting a traffic self-similarity threshold value;
determining a self-similarity ratio for said packet-type traffic handled by said switching device;
determining that the drop of said switching device performance characteristic rate below said switching device performance characteristic threshold value was caused by self-similarity of said packet-type traffic handled by said switching device if said self-similarity ratio for said packet-type traffic handled by said switching device is below said traffic self-similarity threshold value.

24. The method of claim 23 and further comprising the steps of:

determining if the drop of said switching device performance characteristic rate below said switching device performance characteristic threshold value was not caused by self-similarity of said packet-type traffic handled by said switching device; and
if the drop of said switching device performance characteristic rate below said switching device performance characteristic threshold value was not caused by self-similarity of said packet-type traffic handled by said switching device, initiating conventional call control techniques to resolve the drop in said switching device performance characteristic rate.

25. The method of claim 23 wherein the step of rejecting incoming data packets received by said switching device further comprises the steps of:

identifying a defining characteristic for each one of said incoming data packets: and
selectively handling or rejecting each one of said incoming data packets based upon said defining characteristic for that incoming data packet.

26. The method of claim 25 wherein said defining characteristic is a type of class of service.

27. The method of claim 25 wherein said switching device is an ATM switch and said packet-based network is an ATM network.

28. The method of claim 25 wherein said switching device is a router and said packet-based network is an IP network.

29. A switch for a packet-based network, comprising:

a call processing module, said call processing module handling data packets being transported between terminals coupled to said packet-based network;

a buffer coupled to said call processing module, said call processor module queuing incoming data packets, received by said call processing module, in said buffer to await handling; and

a call admission control module coupled to said call processing module, said call admission control module determining whether an incoming data packet received by said call processing module should be accepted or rejected for queuing in said buffer;

said call admission control module determining whether said incoming data packet should be accepted or rejected based upon whether a utilization rate for said switch exceeds a utilization rate threshold value determined using a utilization rate/buffer size functional relationship characterized by reduced buffer consumption rates when handling self-similar traffic for utilization rates generally below said utilization rate threshold value.

**30.** The switch of claim 29 wherein said utilization rate/buffer size functional relationship is characterized by increased buffer consumption rates when handling self-similar traffic for utilization rates generally above said utilization rate threshold value.

**31.** The switch of claim 30 wherein said utilization rate threshold value is approximately 38%.

**32.** The switch of claim 29 wherein said call admission control module further comprises:

instructions for determining at least one performance characteristic for traffic being handled by said switch; and
instructions for determining a self-similarity characteristic for traffic being handled by said switch;
said call admission control module determining whether said incoming data packet should be accepted or rejected based upon:

(1) whether a performance characteristic rate for a first one of said at least one performance characteristic is below a performance characteristic threshold value;
(2) whether a traffic self-similarity rate exceeds a traffic self-similarity threshold value; and
(3) whether said utilization rate for said switch exceeds said utilization rate threshold value.

**33.** A switch for a packet-based network, comprising:

a call processing module, said call processing module handling data packets being transported between terminals coupled to said packet-based network; and

a buffer coupled to said call processing module, said call processor module queuing data packets, received by said call processing module, in said buffer to await handling;

said buffer sized using a self-similarity ratio for traffic to be handled by said switch and an interim buffer size determined by assuming that all traffic to be handled by said switch is non-self-similar, said self-similarity ratio and said interim buffer size functionally related such that self-similar traffic consumes buffer space at a reduced rate when a utilization rate for said switch is below a utilization rate threshold value.

**34.** The switch of claim 33 wherein said utilization rate threshold value is approximately 38%,

FIG. 1

FIG. 2

SWITCH

PROCESSOR SUBSYSTEM 26

MEMORY SUBSYSTEM 28

CALL PROCESSING MODULE 30

CALL ADMISSION CONTROL MODULE 32

DATA BUFFER 34

TO ORIGINATING TERMINAL 14-1

DESTINATION TERMINAL 14-2

SWITCH 12-2

12-1

FIG. 3

FIG. 4